# EUROPÄISCHE PATENTANMELDUNG

(11) **EP 1 998 043 A2**
(43) Veröffentlichungstag der Anmeldung: **03.12.2008**
(21) Anmeldenummer: 08005661.7
(22) Anmeldetag: 26.03.2008
(51) Int. Cl.: F03G 7/10

(54) **Schwungmassenantrieb**

(30) Priorität: 05.04.2007 DE 102007016506
(71) Anmelder: MUNNECKE, Gustav-Adolf, 31073 Grünenplan (DE)
(72) Erfinder: MUNNECKE, Gustav-Adolf, 31073 Grünenplan (DE)

(57) **Zusammenfassung**

Vorrichtung zur Nutzung des Drehmoments einer Schwungmasse 9 zur Energieerzeugung, bestehend aus zumindest einem Rotationsaggregat 9 mit umschaltbarem Motor/Genecator 5 antriebsmäßig (10) verbunden mit vorzugsweise einer drehbaren Schwungmasse (9), welche sich vorzugsweise zwischen 1100 und 1200 Umdrehungen pro Minute als Motor variiert und als Generator (5) vorzugsweise zwischen 1200 und 1100 Umdrehungen Pro Minute variiert oder mit einem Motor 4 durch Keilriemenantrieb mit der Schwungmasse 9 antreibbar verbunden die wiederum antriebsmäßig mit dem Generator 5 verbunden ist und aus Mitteln zum Umschalten des Motors/Generators auf Generatorbetrieb sowie zum Schalten auf Motorbetrieb bei erreichen einer vorgegebenen Drehzahl des Rotationsaggregates (9).

## Beschreibung

Die Erfindung betrifft eine Vorrichtung zur Nutzung des Drehmoments mittels einer rotierenden Schwungmasse eines Rotationsaggregates.

Es ist bekannt, die Schwungmasse zur Energiespeicherung zu nutzen. Weiterhin ist die Eigenschaft des Drehmoments bekannt.

Ausgehend von der Energiespeicherung in Schwungmassen hat der Erfindung die Aufgabe zugrunde gelegen, eine kostengünstige und einfach herstellbare Energieerzeugung der vorstehend genannten Art zu schaffen, welche eine umweltschonende Energieerzeugung mit großen Kosten-/Nutzeffekt für Antriebszwecke (z.B. Fahrzeugantrieb) oder für die dezentrale Strom- oder Wärmeerzeugung ermöglicht.

Die Erfindung besteht in den Merkmalen des Anspruchs 1. Weitere Ausgestaltungen der Erfindung sind Gegenstand der Unteransprüche.

Die Erfindung ist nachstehend anhand der Zeichnungen beispielsweise erlätert.

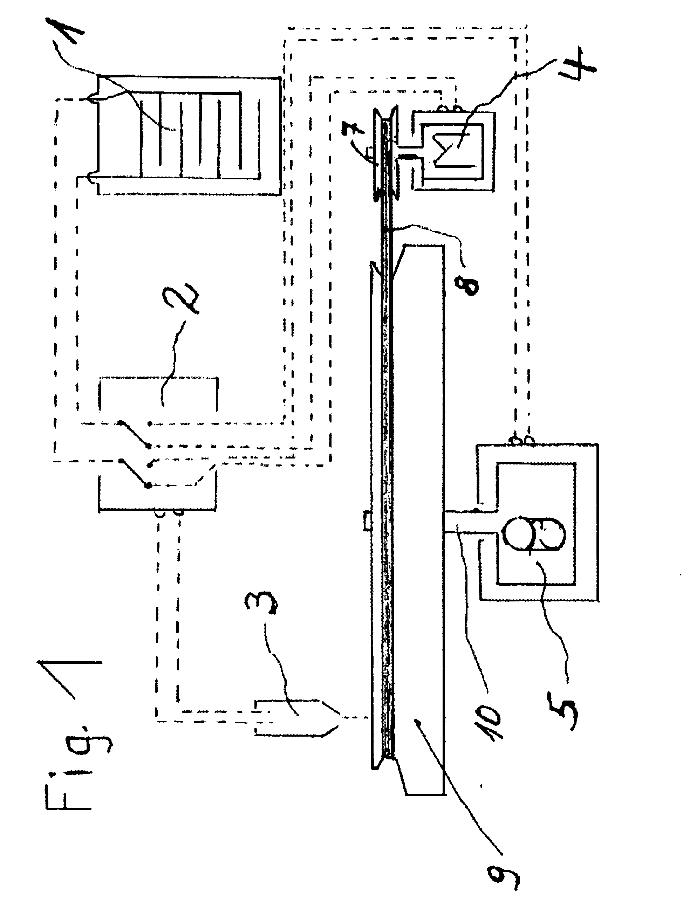

Diese zeigt in schematischer Darstellung : Fig. 1 eine Ausführungsform mit Keilriemenacheibenantrieb in Seitenansicht.

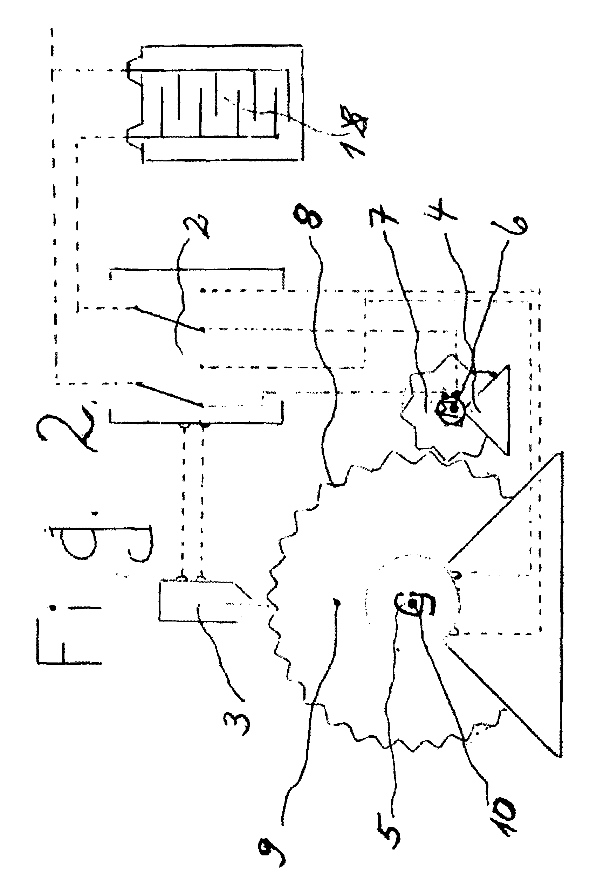

Fig. 2 eine mit Zahn- bzw. Gummireibradantrieb in Seitenansicht.

Bei der dargestellten Ausführung ist ein Akkumulator 1 über zvei Wechselschalter 2 und einem Drehzahlmesser 3 mit einem Motor 4 und einem Generator 5 verbunden, der von der Betriebsstellung Motor in die Betriebsstellung Generator umschaltbar ist. Die Welle 6 des Motors 4 ist antriebsmäßig mit einer kleinen Keilriemenscheibe 7 und Keilriemen kraftschlüssig mit der großen KeilriemenScheibe 9 des schwungrades verbunden. Das Schwungrad ist kraftschlüssig mit der Antriebswelle 10 des Generators 5 verbunden.

Die Vorrichtung arbeitet wie folgt:
zunächst wird das Schwungrad 9 bei eingeschaltetem Motor 4 in Rotation versetzt, wozu der Motor 4 auf Motorbetrieb geschaltet ist und mittels der Welle 6 und der kleinen Keilriemenacheib 7 über einen Keilriemen 8 das große Keilriemenscheibenachwungrad 9 antreibt. Dabei ist der wechselschalter auf Motor/Akku geschaltet.

Nach Erreichen der Höchstdrehzahl des Motors 4 von 12000 Umdrehungen pro Minute und des Generators von 1200 Umdrehungen pro Minute gibt der Drehzahlmesser 3 ein elektrisches Signal an den Wechselschalter 2, welcher auf Generatorenbetrieb/Akku umschaltet, gleichzeitig den Motor abschaltet und somit ein neuer Energieerzeugunga-Arbeitszyklus beginnt. Bei Erreichen einer vorgegebenen Drehzahl des Generators 5 von 1100 Umdrehungen pro Minute und 11000 Umdrehungen des Motors 4 wird durch ein Signal des Drehzahlmessers der Wechselschalter 2 auf Akku/Motorbetrieb umgeschaltet und gleichzeitig der Generatorbetrieb ausgeschaltet. Nach Erreichen der Höchstdrehzahl von 12000 Umdrehungen des Motors bzw. 1200 Umdrehungen des Generators wird durch ein Signal des Drehzahlmessers 3 der wechselschalter 2 auf Abschalten des Motors und Einschalten des Generators/Akku umgeschaltet.
Beim kurzzeitigen Einschalten des Generators wirkt die Trägheitskraft der rotierenden Schwungmassen durch den großen Radius auf den Drehpunkt/Antriebswelle 10 des Generators.

Bei Erreichen einer vorgegebenen Drehzahl von ca. 11000 Umdrehungen des Motors 4 und 1100 des Generators 5 wird wieder der Motor 4 eingeschaltet und der Generator ausgeschaltet. Dieser bevorzugte Drehzahlbereich hat den Vorteil, daß bei Dreh- und Wechsel stromgeneratorenbetrieb die Herzzahl zwischen 50 und 60 Hz variiert.
Um eine gleichmäßige Spannung von 230 V bzw. 380 V zu erreichen, müssen zumindest 2 Vorrichtungen parallel zusammenarbeiten.

Die Erfindung ist nicht auf die dargestellte und beschriebene Ausführungsform beschränkt, die im Rahmen der angefügten Patentansprüche fachmännische Veränderungen erfahren kann hinsichtlich der anzutreibenden Schwungmassen. Dessen Antrieb kann als Zahnkranz, Gummireibrad usw. erfolgen.

Entscheidend ist, daß die Motorkraft an der Peripherie der Schwungmassen angreift und das Drehmoment im Abstand zum Drehpunkt auf den Generator angreift und der Motor mindestens die 10-fache Drehzahl pro Minute gegenüber der Generatorendrehzahl hat und daß das Übersetzungsverhältnis mindestens 1 : 10 Generator zu Motor ist. Optimal ist das Ubersetzungsverhältnis 1 : 20, also 24000 Umdrehungen/Minute Motor: 1200 Umdrehungen Generator.

Es ist auch im Rahmen der Erfindung, daß statt des elektrischen Motorantriebs auch andere Antriebskraftmöglichkeiten Anwendung finden. Desgleichen gilt das für den Generatorbetrieb, welcher auch durch andere direkt anzutreibende Maschinen z.B. durch Windkraft, Wasserkraft usw. ersetzt werden kann.
Es iat auch im Rahmen der Erfindung, den Generator 5 bei Batteriebetrieb als Gleichstrommotor/Generator auszuführen, wobei der Gleichstrommotor zur Beschleunigung der Schwungmassen nur Beine halbe Nennleistung und als Generator Generatorbetrieb seine volle Nennleistung abgibt. Bei dieser Ausführungsform entfällt der Motor 4 als Antrieb. Eine bevorzugte Ausführungsform ist der Betrieb mit Wochsel-/Drehstrommotoren/Generatocon mit rückspeisefähigen Umrichtern (Frequenzumrichtern).
Dabei wird die halbe Nennleistung z.B. 1 kw/h als Motor der Wechsel/Drehatrom aus dem Netz gezogen.
Als Generatorbetrieb 2 kw/h wird die Rückspeisung mit Vierquadrantenbetrieb ins Wechsel/Drehatromnetz zurück geführt bei voller Nennleistung des Generators.

ES ist auch im Rahmen der Erfindung, daß bei nur einem als Motor und Generator 5 ausgebildetem Antrieb die Drehzahl z.B. als Motorbetrieb zwischen 1100 und 1200 Umdrehungen pro Minute und als Generator zwischen 1200 und 1100 Umdrehungen variiert.

## Patentansprüche

1. Vorrichtung zur Nutzung des Drehmoments einer rotierenden Trägheits/Schwunginaeae zur Energieerzeugung, bestehend aus
zumindest einem Rotationsaggregat 9 mit einem einschaltbaren Motor 4 und einem antriebsmäßig verbundenen einschaltbaren Generator 5 aus Mitteln zum Wechselschalter 2 auf Einschalten des Motors 4 und Ausschalten des Generators 5 und Einschalten des Generators 5 und Ausschalten des Motors 4 mittels vorzugsweise Drehzahlmesser 3 gesteuerten Wechselschalters 2 aus Mitteln zur optimal zyklischen Drehzahlsteuerung im oberen Drehzahlbereich des Generators und Motors.

2. Vorrichtung nach Anspruch 1
**gekennzeichnet**, daß der zyklische Motor- oder Generatorbetrieb im obersten Drehzahlbereich der Vorrichtung stattfindet.

3. Vorrichtung
nach mindestens einem der vorherigen Ansprüche, **gekennzeichnet durch** einen Drehzahlmesser, dessen Ausgangssignale elektronische Schaltvorrichtungen für die drehzahlabhängigen Schaltvorgänge steuern.

4. Vorrichtung
nach mindestens einem der vorherigen Ansprüche, **gekennzeichnet durch** einen antreibbaren Zahnkranz an der Peripherie des Schwungrades oder anderer Antriebamöqlichkeiten.

5. Vorrichtung
nach mindestens einem der vorherigen Ansprüche, **gekennzeichnet dadurch, daß** bei Generatorbetrieb das Antriebsmittel zwischen Motor und Generator getrennt wird.

6. Vorrichtung
nach mindestens einem der vorherigen Ansprache, **gekennzeichnet dadurch, daß** für Generatorbetrieb der Motor 4 entfällt und der Generator 5 auch als Motor und Generator ausgebildet ist.

7. Vorrichtung
nach mindestens einem der vorherigen Ansprüche, **gekennzeichnet dadurch, daß** der motor/Generator 5 als Motor seine halbe Nennleistung und bei umschalten auf Generatorbetrieb seine volle Nennleistung abgibt.

8. Vorrichtung
nach mindestens einem der vorherigen Ansprüche **gekennzeichnet dadurch, daß** bei der Ausführungsform mit nur einem Motor/Generator die Drehzahl als Motor zwischen 1100 und 1200 Umdrehungen/Min. und die Drehzahl als Generator zwischen 1200 und 1100 Umdrehungen/Min. variiert.
